# FASCICULE DE BREVET EUROPEEN

(11) **EP 0 885 370 B1**
(45) Date de publication et mention de la délivrance du brevet: **12.06.2002**
(21) Numéro de dépôt: 96906806.3
(22) Date de dépôt: 08.03.1996
(51) Int. Cl.: F25D 16/00, A47J 39/00, F28D 15/06

(54) **CHARIOTS MOBILES DISTRIBUTEURS DE PLATEAUX-REPAS CHAUDS ET FROIDS**
TRANSPORTWAGEN FÜR WARM- UND KALTSPEISEN
TROLLEYS FOR SERVING HOT AND COLD MEAL TRAYS

(43) Date de publication de la demande: 23.12.1998
(73) Titulaire: Grandi, René, 22060 Campione d'Italia (IT)
(72) Inventeur: Grandi, René, 22060 Campione d'Italia (IT)
(74) Mandataire: Roman, Michel
(86) Numéro de dépôt international: FR9600370
(87) Numéro de publication internationale: WO9733130

(56) Documents cités:
- WO-A-96/10723
- DE-A- 4 105 034
- FR-A- 2 652 885
- FR-A- 2 684 281
- FR-A- 2 689 222
- US-A- 4 614 091
- US-A- 5 159 972

## Description

La présente invention a pour objet un perfectionnement au document WO-A-97/09575 (compris dans l'état de la technique selon l'article (54(3) CBE) concernant un chariot mobile distributeur de plateaux-repas chauds et froids à remise en température et réfrigération à réserve autonome de frigories et régénération de frigories.

Il est destiné à la distribution de plateaux-repas comportant une partie avec mets chauds et une partie avec mets froids, et devant être maintenus à basse température en attendant que la partie du plateau adéquate soit remise en température pour la consommation des mets chauds.

On connaît des chariots distributeurs de repas comportant un compresseur embarqué pour leur maintien en froid. Mais ces moyens nécessitent un certain équipement: compresseurs, évaporateurs, condensateurs, etc. Ces éléments présentant une grande fragilité dans le contexte où ils sont utilisés et représentent une surcharge de poids et un encombrement difficile à véhiculer en plus de la masse chargée indispensable du chariot.

Par ailleurs, ce mode de réfrigération ne permet pas le déplacement et le transport entre le lieu de fabrication et de conditionnement jusqu'au lieu de distribution et de consommation des repas, lieux qui sont très souvent éloignés et qui nécessitent un transfert par camions, lesquels ne sont pas toujours réfrigérés. Ainsi pour pallier à ces inconvénients de transport, certains utilisent la neige carbonique, produit onéreux et volatil risquant en outre de provoquer le gel des aliments.

Le document FR-A-2 684 281 décrit un chariot distributeur de plateaux-repas chauds et froids destiné à la distribution de plateaux-repas comportant une partie avec mets chauds et une partie avec mets froids et pouvant être véhiculé d'un lieu à un autre, ce chariot comportant une double enceinte recevant les plateaux-repas constituée d'une zone de réfrigération permanente et d'une zone mixte à remise en température pré-déterminée, séparées par une paroi isotherme pourvue de fentes dans lesquelles sont insérés les plateaux-repas. Le chariot est accouplable à une unité fixe de réfrigération et de chauffage.

La demande WO-A-97/09575 décrit un chariot distributeur de plateaux-repas chauds et froids à réfrigération par réserve régénérable de frigories, pouvant rester en attente pendant plusieurs heures en maintenant l'ensemble des aliments à basse température, avant d'assurer la remise en température des seuls mets à consommer chauds.

Ce chariot comporte une enceinte isolante contenant les plateaux-repas, formée d'une zone de réfrigération permanente et d'une zone mixte à remise en température séparées par une paroi isotherme pourvue de fentes avec joints rotatifs dans lesquelles sont insérés les plateaux-repas. Cette double enceinte est refroidie au moyen de deux réserves de liquide frigorigène séparées par une paroi isolante pourvue de cylindres rotatifs commandés par un système d'entraînement contrôlé par thermostat, et comportant des secteurs thermiquement conducteurs et des secteurs thermiquement isolants disposés de manière à pouvoir empêcher ou autoriser le passage des frigories entre les deux réserves suivant la position desdits cylindres. La première réserve contient un liquide réfrigérant à très basse température, le liquide frigorigène de la seconde réserve, ou réserve tampon, activé par un accélérateur, circulant dans des gaines à ailettes disposées autour et au centre de la double enceinte. La remise en température de la zone mixte s'effectue grâce à des éléments de réchauffage, une pompe-électrovanne aspirant le fluide frigorigène de la gaine entourant cette zone et l'envoyant dans une réserve de stockage, tandis que des électrovannes assurent simultanément la fermeture de cette gaine et l'ouverture de la gaine centrale, normalement fermée, pour continuer à refroidir la zone de réfrigération permanente.

Le chariot objet de la présente invention reprend les mêmes dispositions et permet de simplifier notablement les circuits de réfrigération tout en assurant une remarquable fiabilité de l'ensemble, grâce à l'utilisation d'un système de caloducs pour transférer le froid de la réserve de frigories vers les enceintes contenant les plateaux-repas.

Le caloduc est un dispositif capable de conduire la chaleur ou le froid ne comportant aucun organe en mouvement, et en particulier pas de pompes, ce qui lui confère une très longue durée de vie. Sa première application, étudiée par la NASA vers 1965, a été le refroidissement des matériels électroniques à bord des satellites. Aujourd'hui, le caloduc est devenu un composant classique dans l'industrie spatiale, et il commence à être utilisé dans certains équipements grand public.

Il est constitué d'une enceinte étanche qui contient un liquide en équilibre avec sa vapeur en l'absence totale d'air. Les échanges thermiques se font par changement de phase (évaporation et condensation) tandis que le transport de chaleur ou de froid est remplacé par le transport d'un fluide. Ces deux points sont la clé des bonnes performances thermiques des caloducs.

Dans les zones chauffées, le liquide s'évapore et la vapeur vient se condenser dans les zones refroidies. Ce condensat retourne vers les parties chaudes grâce à l'effet de "mèche" d'une structure capillaire, ou simplement par gravité. Une circulation vapeur-liquide s'établit ainsi et transporte la chaleur des zones chaudes vers les zones froides ou, bien sûr, les frigories des zones froides vers les zones chaudes, de la partie condenseur vers la partie évaporateur du caloduc.

La réfrigération du chariot selon l'invention est assurée par deux réserves de liquide frigorigène, une pour la zone de réfrigération permanente et une pour la zone mixte, dans lesquelles baignent les condenseurs de deux caloducs dont les évaporateurs respectifs permettent de refroidir indépendamment les deux zones au moyen de turbines ventilant les frigories sur les plateaux-repas. Ce système fonctionne en permanence dans la zone de réfrigération permanente mais, lors de la remise en température de la zone mixte (zone froide, puis chaude), une électro-vanne permet de bloquer le fluide à l'intérieur du condenseur pour éviter qu'il ne se trouve dans l'évaporateur où il risquerait d'exploser en raison de l'élévation de température provoquée par les moyens de réchauffage.

Sur les dessins schématiques annexés, donnés à titre d'exemple non limitatif d'une des formes de réalisation de l'objet de l'invention:
la figure 1 représente, vu de côté en élévation, un chariot distributeur de plateaux-repas dépourvu de portes,
la figure 2 est une coupe horizontale suivant les flèches A-A de la figure 1,
la figure 3 est une coupe transversale verticale, à une échelle différente, suivant les flèches A-A de la figure 2,
la figure 4 représente un caloduc seul, vu de l'intérieur de la zone mixte
et la figure 5 montre les deux caloducs vus de côté.

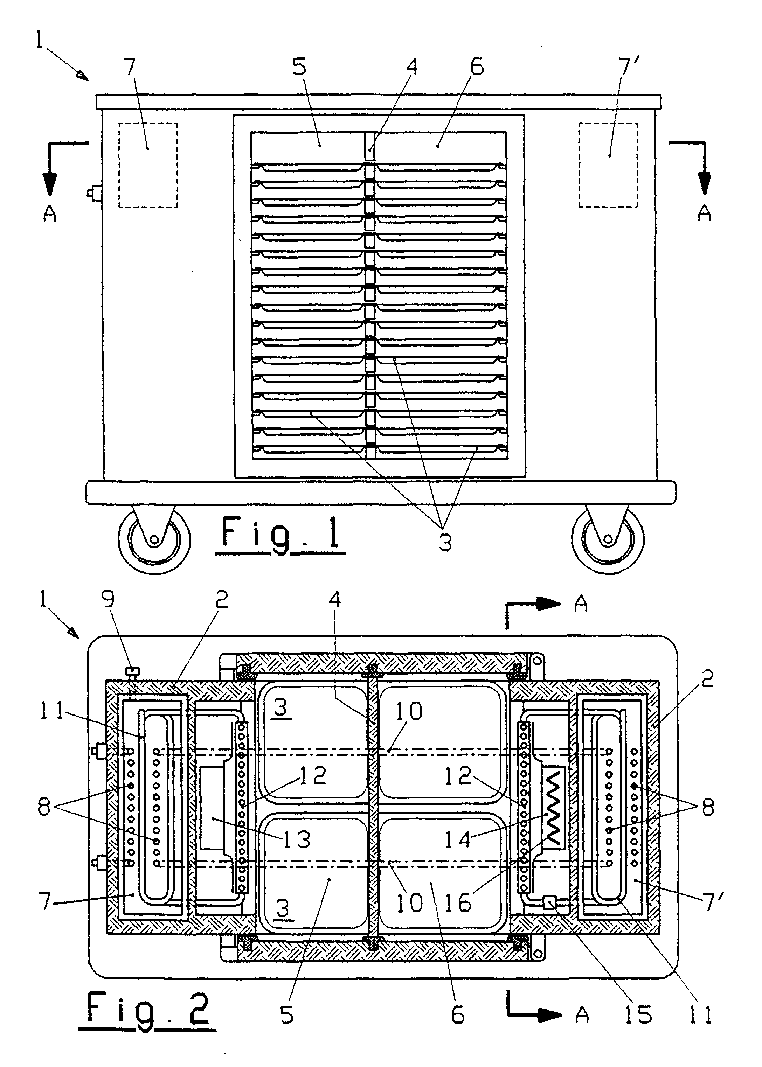

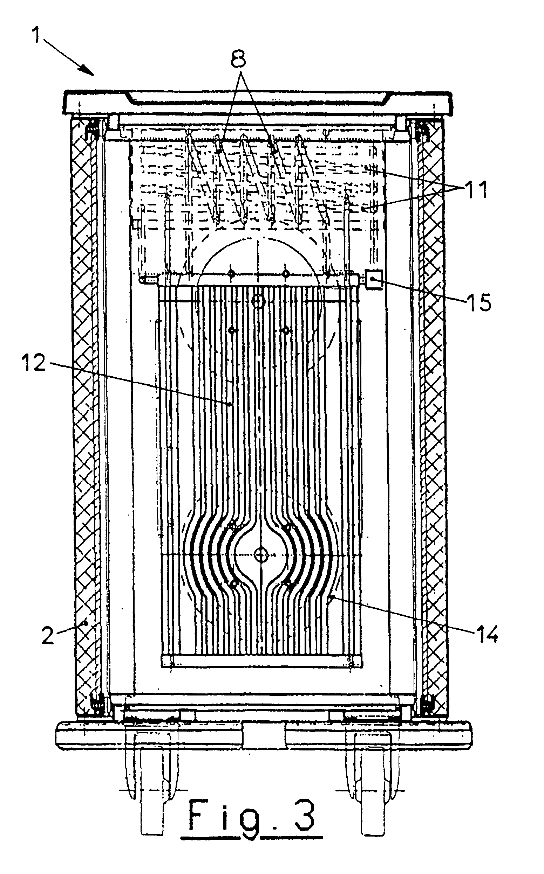

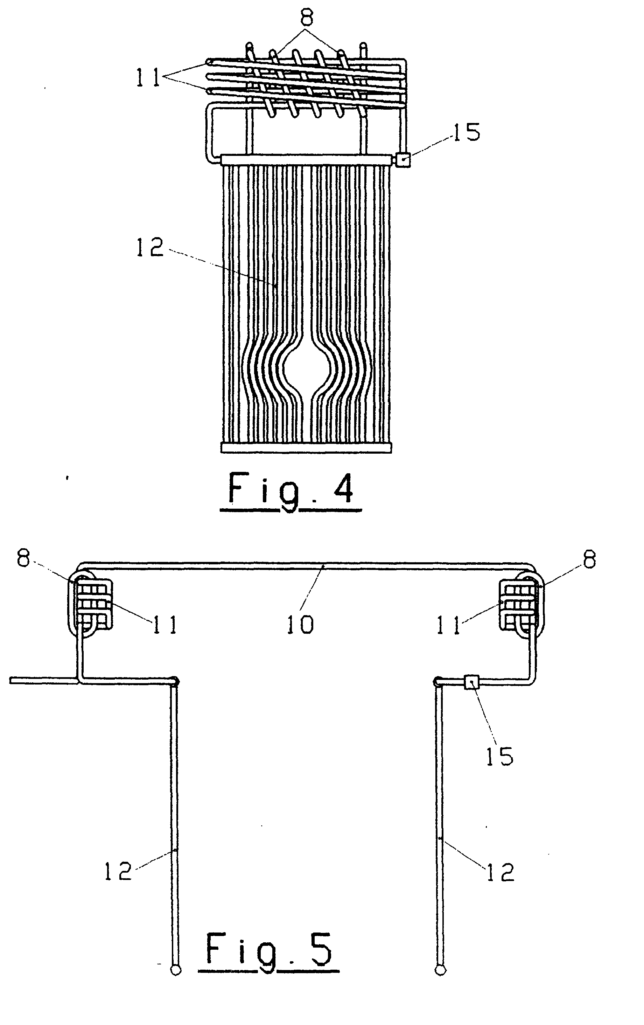

Le chariot 1, figures 1 à 5, est pourvu d'un calorifugeage 2 poussé et comportant une enceinte recevant les plateaux-repas 3, divisée par une paroi isotherme 4 en deux zones, une zone en réfrigération permanente, ou zone froide 5, et une zone mixte 6 de remise en température après un maintien en réfrigération. La paroi 4 comporte pour chaque plateau une fente avec un joint rotatif obturant l'espace resté libre lorsque le plateau est retiré.

Deux réserves 7, 7' de liquide super réfrigérant à -37 ou -40 °C, disposées en partie haute du chariot 1 dans chacune des deux zones 5 et 6, comportent des serpentins 8 pour refroidir par des moyens externes le liquide contenu, qui peut éventuellement être introduit ou évacué par des raccords rapides 9. Les deux serpentins sont reliés entre eux par des tubulures 10 traversant le haut du chariot.

Chacune des deux réserves 7, 7' contient un condenseur 11 à tube caloporteur (caloduc) formé d'un serpentin à spires horizontales. Chaque condenseur est relié à un évaporateur 12 formé d'un réseau de tubes verticaux et disposé dans l'une des zones 5, 6 contenant les plateaux-repas 3 de manière à pouvoir les refroidir indépendamment. Les frigories sont diffusées sur l'ensemble des deux zones au moyen de turbines 13, 14 provoquant un flux d'air qui traverse les évaporateurs 12.

Les spires horizontales des condenseurs 11 ont une pente d'au moins 3 %, ce qui permet au caloduc formé par un condenseur et un évaporateur d'être du type à gravité, plus simple à fabriquer que le type "à mèche".

Une électrovanne 15 anti-retour, disposée sur l'un des conduits reliant les deux partie du caloduc de la zone mixte 6, bloque le fluide à l'intérieur du condenseur 11 lors de la remise en température des mets chauds effectuée grâce à des calories produites par des résistances 16, et propulsées par les turbines 14 (ces dernières brassent également l'air froid au moment de la réfrigération totale de l'enceinte). Dans la zone froide 5, la réfrigération, n'est pas interrompue.

D'une manière générale, la régulation de la température est assurée par des thermostats commandant le fonctionnement des turbines 13, 14 durant le refroidissement et les résistances 16 lors de la remise en température de la zone mixte 6.

Les turbines 13, 14, les résistances 16, l'électrovanne 15 et les équipements de commande et de contrôle sont alimentés électriquement sur les lieux de préparation et les lieux de remise en température du chariot 1, mais pendant la période de transport ou de déconnexion, une batterie rechargeable permet de prendre le relais.

Selon une variante d'exécution (non représentée et non conforme à l'invention) le dispositif peut être séparé en deux modules: un chariot contenant les plateaux-repas 3 et un module fixe comportant tous les éléments frigorifiques et thermiques : réserve 7, 7', serpentins 8, condenseurs 11, évaporateurs 12, turbines 13 et 14 et résistances 16. Le chariot se connecte au module fixe pour être réfrigéré et mis en température. Pour effectuer cette connexion et pour obtenir les résultats décrits ci-dessus, les dispositions intérieures du chariot: les plateaux 3, la paroi isotherme 4 ainsi que les ouvertures sont positionnés différemment, sans pour cela changer ou gêner l'efficacité des moyens contenus dans le module fixe. Dans cette version, la remise en température peut s'effectuer par la circulation d'air ou d'un circuit d'huile thermique dans une gaine dotée d'ailettes, ou de caloducs, les turbines de ventilation 14 soufflant les calories sur la zone mixte 6 des plateaux à réchauffer au moment de leur remise en température. L'huile thermique, qui peut monter jusqu'à 300 °C est chauffée par une seule centrale de résistances puis propulsée par un circulateur dans la gaine. Les turbines 14 ayant propulsé les frigories pendant l'attente en réfrigération soufflent alors de l'air chaud pendant que les turbines 13 continuent de ventiler la zone froide 5. Les caloducs sont également chauffés par une centrale de résistances.

Selon une autre variante d'exécution, le chariot 1 est équipé d'un compresseur de type ménager avec des serpentins permettant d'abaisser la température du liquide réfrigérant des réserves 7, 7' pendant l'attente de la distribution des plateaux-repas 3.

Selon un mode de réalisation non conforme à l'invention, pour être chargé en liquide frigorigène, le chariot 1 sera avantageusement connecté à une "centrale de froid" par un système de tuyauteries et de raccords rapides selon le document FR-A-2 691 237, ou connecté à un dispositif comportant une nourrice accumulatrice de froid ainsi qu'à une platine productrice de calories, comme décrit dans le document FR-A-2 689 222. Ainsi connectée, la nourrice communique aux réserves 7, 7', les frigories, pendant le temps d'attente. De même la platine permet le réchauffage de la zone mixte qui dispose, soit de résistances, soit d'un circuit d'huile thermique pouvant monter jusqu'à 300 °C.L'huile thermique est chauffée par une seule centrale de résistances puis propulsée par un circulateur, à chaque plateau-repas 3 ou collectivement.

Le positionnement des divers éléments constitutifs donne à l'objet de l'invention un maximum d'effets utiles qui n'avaient pas été, à ce jour, obtenus par des dispositifs similaires.

## Revendications

1. Chariot distributeur de plateaux-repas chauds et froids à remise en température et réfrigération à réserve autonome de frigories et régénération des frigories, destiné à la distribution de plateaux-repas (3) comportant une partie avec mets chauds et une partie avec mets froids et pouvant être véhiculé d'un lieu à un autre et rester en attente pendant plusieurs heures en maintenant l'ensemble des aliments à basse température, avant d'assurer la remise en température des seuls mets devant être consommés chauds, ce chariot comportant une double enceinte recevant les plateaux-repas (3) constituée d'une zone de réfrigération permanente (5) et d'une zone mixte (6) à remise en température pré-déterminée, séparées par une paroi isotherme (4) pourvue de fentes dans lesquelles sont insérés les plateaux-repas,
le chariot comprenant, en vue d'assurer la réfrigération de l'enceinte, deux réserves (7, 7') de liquide frigorigène, une pour la zone de réfrigération permanente (5) et une pour la zone mixte (6), dans lesquelles baignent les condenseurs (11) de deux caloducs dont les évaporateurs (12) respectifs permettent de refroidir indépendamment les deux zones au moyen de turbines (13, 14) ventilant les frigories sur les plateaux-repas (3), une électro-vanne (15) permettant de bloquer le fluide à l'intérieur du condenseur (11) de la zone mixte (6) lors de sa remise en température, le chariot comprenant en outre des moyens (8;40,41) de régénération des frigories et des moyens de chauffage (16) pouvant être simultanément mis en oeuvre pour provoquer l'élévation de température de cette zone.

2. Chariot selon la revendication 1, se caractérisant par le fait que les condenseurs (11) des caloducs sont formés d'un serpentin à spires horizontales présentant une pente égale ou supérieure à 3 %.

3. Chariot selon l'une quelconque des revendications précédentes, se caractérisant par le fait que les évaporateurs (12) sont formés d'un réseau de tubes verticaux disposé dans l'une des zones (5, 6) contenant les plateaux-repas (3).

4. Chariot selon l'une quelconque des revendications 2 et 3, se caractérisant par le fait que chaque caloduc, formé par un condenseur (11) et un évaporateur (12), est du type à gravité, c'est-à-dire qu'il ne comporte pas de structure capillaire.

5. Chariot selon l'une quelconque des revendications précédentes, se caractérisant par le fait que la remise en température des mets chauds dans la zone mixte (6) est effectuée grâce à des calories produites par des résistances (16) et propulsées par les turbines (14) soufflant également l'air froid au moment de la réfrigération totale de l'enceinte.

6. Chariot selon l'une quelconque des revendications précédentes, se caractérisant par le fait que les réserves (7, 7') de liquide frigorigène comportent des serpentins (8) pour refroidir par des moyens externes le contenu desdites réserves, les serpentins des deux réserves étant reliés entre eux par des tubulures (10) traversant le haut du chariot (1).

7. Chariot selon l'une quelconque des revendications précédentes, **caractérisé en ce que** le chariot (1) est équipé d'un petit compresseur (40) de type ménager avec des serpentins (41) permettant d'abaisser la température du liquide réfrigérant des réserves (7, 7') pendant l'attente de la distribution des plateaux-repas (3).

## Patentansprüche

1. Wagen zur Verteilung warmer und kalter Speisen mit autonomer Kältereserve und Kälteregenerierung, bestimmt zur Aufnahme von Serviertabletts (3), welcher ein Abteil für die warmen und ein Abteil für die kalten Speisen besitzt und der von einem Ort zum anderen gefahren und mehrere Stunden in Bereitschaft gehalten werden kann, wobei alle Speisen auf niedriger Temperatur gehalten werden, bevor mit dem Erwärmen nur der Speisen begonnen wird, die warm verzehrt werden, und der eine doppelte Wandung zur Aufnahme der Serviertabletts (3) besitzt, wobei der Wagen eine Dauer-Kühlzone (5) und eine gemischte Zone (6) für das Erwärmen auf eine vorbestimmte Temperatur besitzt, die durch eine isolierende, Schlitze aufweisende Zwischenwand (4) getrennt sind, in welche die Serviertabletts eingeschoben werden,
wobei der Wagen zum Zweck der Kühlung der Kammer zwei Kühlmittelbehälter (7, 7') aufweist, je einen für die Dauerkühlzone (5) und für die gemischte Zone (6), in welche die Kondensatoren (11) zweier Wärmeübertrager eintauchen, deren zugehörige Verdampfer (12) die voneinander unabhängige Kühlung der beiden Zonen mit Hilfe von Ventilatoren (13, 14) ermöglichen, welche die Kälte über die Serviertabletts (3) blasen, wobei ein Magnetventil (15) das Absperren des Fluids im Kondensator (11) der gemischten Zone (6) bei der Erwärmung ermöglicht und der Wagen im übrigen Mittel (8, 40, 41)zur Kälte-Regenerierung sowie Heizelemente enthält, die gleichzeitig in Betrieb genommen werden können, um eine Temperaturerhöhung in dieser Zone zu ermöglichen.

2. Wagen gemäss Patentanspruch 1, **gekennzeichnet dadurch, dass** die Kondensatoren (11) der Wärmeübertrager aus einer Spirale mit horizontalen Windungen bestehen, deren Steigung gleich oder größer 3 % ist.

3. Wagen gemäss einem der obenstehenden Patentansprüche, **gekennzeichnet dadurch, dass** die Verdampfer (12) aus einer Reihe senkrechter Rohre bestehen, die in einer der Zonen (5, 6), welche die Serviertabletts (3) enthalten, angeordnet sind.

4. Wagen gemäss einem der obenstehenden Patentansprüche 2 und 3, **gekennzeichnet dadurch, dass** jeder der aus einem Kondensator (11) und einem Verdampfer (12) bestehenden Wärmeübertrager die Schwerkraft nutzt, d.h. dass er keine Kapillarstruktur besitzt.

5. Wagen gemäss einem der obenstehenden Patentansprüche, **gekennzeichnet dadurch, dass** die Erwärmung der warmen Speisen in der gemischten Zone (6) mit Hilfe der von den Widerständen (16) erzeugten Wärme erfolgt, die von den gleichen Ventilatoren (14), transportiert wird, die beim Abkühlen der gesamten Kammer die Kaltluft blasen.

6. Wagen gemäss einem der obengenannten Patentansprüche, **gekennzeichnet dadurch, dass** die Kühlmittelbehälter (7, 7') Kühlschlangen (8) enthalten, um mit externen Mitteln den Inhalt dieser Behälter abzukühlen, wobei die Kühlschlangen in beiden Behältern durch Rohrleitungen (10) miteinander verbunden sind, die den Wagen (1) im oberen Bereich durchqueren.

7. Wagen gemäss einem der obengenannten Patentansprüche, **gekennzeichnet dadurch, dass** der Wagen (1) einen kleinen Kompressor (40) besitzt, wie er in Haushaltsgeräten verwendet wird, und Kühlschlangen (41), welche ein Absenken der Temperatur der Kühlflüssigkeit in den Behältern (7, 7') ermöglichen, während der Wagen auf die Verteilung der Serviertabletts (3) wartet.

## Claims

1. Carriage distributing hot and cold meal trays with heating and cooling function provided by an autonomous reserve of negative kilocalories and regeneration of the negative kilocalories, intended for the distribution of meal trays (3) and including a part with hot foodstuffs and a part with cold foodstuffs and able to be conveyed from one place to another and remain in reserve for several hours while maintaining all the food at low temperature, before reheating of only the foodstuff which is to be to be consumed hot, this carriage comprising a double enclosure receiving the meal trays (3) consisting of a zone of constant refrigeration (5) and a mixed zone (6) with heating to a predetermined temperature, separated by an isothermal wall (4) equipped with slots into which the meal trays are inserted,
the carriage comprising, for the purposes of ensuring refrigeration of the enclosure, two storage tanks (7, 7') of refrigerating liquid, one for the zone of constant refrigeration (5) and one for the mixed zone (6), in which are submerged the condensers (11) of two heat pipes, the respective evaporators (12) of which allow independent cooling of the two zones by means of fans (13, 14) blowing the negative calories over the meal trays (3), a solenoid valve (15) making it possible to block the fluid inside the condenser (11) of the mixed zone (6) during its heating, the carriage also including negative calorie regenerating means (8, 40, 41) and heating means (16) that can be simultaneously operated in order to cause the temperature in this zone to increase.

2. Carriage according to claim 1 **characterized by** the fact that the condensers (11) of the heat pipes are formed of a coil with horizontal turns presenting a slope equal to or greater than 3 %.

3. Carriage according to any of the preceding claims, **characterized by** the fact that the evaporators (12) consist of a network of vertical tubes arranged in one of the zones (5, 6) containing the meal trays (3).

4. Carriage according to any of claims 2 and 3, **characterized by** the fact that each heat pipe, formed by a condenser (11) and an evaporator (12), are the gravity type, i.e. it does not include a capillary structure.

5. Carriage according to any of the preceding claims, **characterized by** the fact that the hot foodstuff in the mixed zone (6) is heated by calories produced by resistances (16) and propelled by the fans (14) that also blow the cold air on total refrigeration of the enclosure.

6. Carriage according to any of the preceding claims, **characterized by** the fact that the refrigerating liquid storage tanks (7, 7') comprise coils (8) for cooling the contents of the aforesaid reserves by external means, the coils of the two tanks being interconnected by nozzles (10) passing through the top of the carriage (1).

7. Carriage according to any of the preceding claims, **characterized in that** the carriage (1) is equipped with a small compressor (40) of household type with coils (41) for lowering the temperature of the refrigerating liquid storage tank (7, 7') when waiting for the meal tray (3) to be distributed.
